# EUROPEAN PATENT APPLICATION

(11) **EP 1 614 949 A1**
(43) Date of publication of application: **11.01.2006**
(21) Application number: 05006105.0
(22) Date of filing: 21.03.2005
(51) Int. Cl.: F16L 11/08, B32B 1/08

(54) **Hose for hydraulic circuits, in particular for break systems, with strain resistant braiding and plastic coating**

(30) Priority: 28.05.2004 IT MI20041091
(71) Applicant: Manifattura Gomma Finnord S.P.A., 21100 Varese (VA) (IT)
(72) Inventor: Cazzanica, Mario, 21100 Varese (VA) (IT)
(74) Representative: La Ciura, Salvatore

(57) **Abstract**

This invention relates to plastic hoses for hydraulic circuits, in particular plastic hoses for motor-vehicle break systems, equipped with leak-tight braid and plastic coating.

The invention also proposes the respective production method of which provides for a fabric braiding around a plastic hose, embedded in a colloidal solution (adhesive solution), and a plastic coating which improves the hose tightness and deformation stress properties.

More particularly the method provides for the following phases:
- dripping on a plastic hose of an adhesive solution;
- braiding of yarn on the hose, with subsequent impregnation and spreading of the said adhesive solution on hose and fabric;
- lapping and calibration of the adhesive solution by means of passage through sizing die;
- drying in which pre-cross linking of the glue occurs;
- recoating with plastic, in particular polyester.

## Description

This invention proposes plastic hoses for hydraulic systems, in particular plastic hoses for motor-vehicle break systems, provided with strain resistant braid and plastic coating.

This invention also proposes the respective production method consisting of a fabric braiding around a plastic hose, embedded in an adhesive solution, and an external plastic coating to improve the tightness and the strain strength properties of the hose.

As everybody knows, the car, motorcycle industry and the like, has an ever increasing need to reduce as much as possible the vehicle weight and, on the other hand, to improve the efficiency and trustworthiness of the plant-engineering components such as the break system, with a consequent ever more frequent replacement of mechanical components with parts made of plastic or the like.

In particular with reference to the break systems it is common to use, in place of rubber hoses, plastic hoses reinforced with a metal braid. Such hoses, despite their good performances, can be however perfectible as to lightness, versatility of use and improvement of the strain strength and trustworthiness properties.

This invention falls into this sector by proposing a plastic hose for hydraulic systems, provided with fabric strain resistant braid embedded into a chlorosulphonate polyethylene adhesive layer and coated with plastic.

The invention also proposes the respective production method, which consists of a yarn braiding around a plastic hose, after having spread a latex/glue layer on the said hose and, eventually, the plastic coating.

The use of the method according to this invention enable to obtain a multilayer plastic hose with excellent flexibility and strain strength properties, very inexpensive and light, which can be used also where the known metal mesh plastic hoses, due to their poor flexibility, create problems.

This hose according to this invention will be now described in detail, by way of example but without any limitation thereto, with reference to the enclosed drawings, wherein:

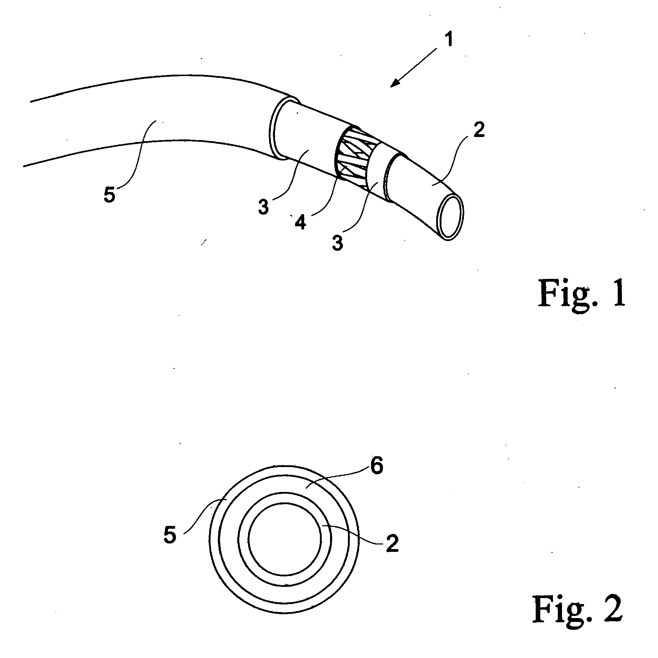

- figure 1 is a axonometric section plane of the plastic hose according to this invention showing the different layers it is composed of;
- figure 2 is the cross section of a hose according to this invention;

With reference to the above-mentioned figures, 1 is referred to the hose as a whole, where around a hose 2, made of extruded plastic, a fabric 4 made of material such as KURALON® (polyvinyl-alcohol fibre), embedded in an adhesive solution 3, is braided.

The whole is encapsulated into a plastic external coating 5 in polyester or TPE.

The hydraulic circuits with flexible hoses imply the matter of sliding the hoses along winding paths, due to lack of space, and preventing too narrow radii of curvature from excessively warping the hose circular shape, reducing the section thereof with consequent reduction or stoppage of the hydraulic liquid flow.

In fact, by excessively bending a hose, regardless of the material used, such hose tends to warp to such an extent that it gets crushed blocking the hydraulic liquid flow.

In order to minimize such drawbacks, the hydraulic hose is usually wrapped in a braid or mesh made of fabric or metal; plastic hoses reinforced with metallic mesh or rubber with a fabric layer embedded inside are known; also with these kind of hoses the problem of the excessive deformation due to bending with narrow radii of curvature is not overcome. It is possible to obtain hoses with satisfactory strain strength and lightness properties, but the real problem of excessive deformation remains.

In fact, neither the braid made of metal or other material, as it is assembled in the known hoses, nor the rubber the hose is made of, can help to keep the shape.

This invention, alternatively, proposes a hose whose combination of materials and production method efficiently overcome the said problem, unsolved so far, enabling to bend a hose at will without the risk of prejudicing the efficiency of the hydraulic system further to the loss in the shape.

The method according to this invention aims at obtaining, starting from an extruded plastic hose 2 of known type, a multilayer hose 1, in which at least one intermediate layer 6 is made by interlacing yarns around the plastic hose 2, after having spread an adhesive solution 3 on the said hose 2.

The said adhesive solution 3, which, by way of example, can be a polyethylene-based solution such as ACSM (chlorosulphonated polyethylene) or CSM (chlorosulphonated polyethylene), is dripped from a syringe on the hose 2 before the threads coming out of the braiding machine, where the hose 2 passes through, interlace. According to this method, the braiding cone, tightening the meshes, spreads the adhesive solution 3 all over the hose surface.

The amount of adhesive solution 3 is such as to completely fill the empty spaces of the meshes and to pass through it and finally to rise to the surface of the said braid.

Once the braid is completed, the hose passes through a lapping seal or sizing die of the adhesive solution 3 which has risen to the surface to lay evenly the said adhesive solution 3 on the external surface of the mesh 4.

The mesh 4 is therefore completely embedded in the adhesive solution 3 and, after a brief period of drying and pre-cross linking of the adhesive solution 3, it results in a single body with it, with the features of a textile diaphragm around the hose 2.

The hose with the aforesaid characteristics is then coated with plastic 5.

Given that the said adhesive solution is made of chlorosulphonated polyethylene or sulphonated polyethylene, it will be compatible with and will offer a satisfactory adhesion to the polyester of the external coating 5 of the hose 2.

A leak-tight diaphragm 6 is thus created, consisting of the braid 4 and adhesive material 3 perfectly adherent both to the hose 2 and the coating 5, which, beside being in itself an element with high strain strength and tightness properties, invites to collaborate on the tightness function both the inside hose 2 and the coating material 5. All the layers collaborate on the tightness and perfectly fit to the deformation movements due to the bending changes as well.

Compared with the known multilayer hoses, the hose according to this invention provides for the use of such materials which, if assembled according to the method of this invention, are able to exploit to the highest degree the mechanical and physical characteristics of each component and in combination with each other enhance the characteristics thereof, without the risk that one prejudices the working of the other, as it happens for the known hoses, for example in case of metal mesh hoses.

In fact, the known plastic hoses with metal mesh do not allow narrow radii of curvature, and furthermore are more deformable than those proposed by this invention, since the steel of the mesh under stress and at certain temperatures, tends to settle down; furthermore, the working strain strength at high temperatures is lower, for the steel being a good conductor, it absorbs heat fast, heats up thus raising the general temperature of the hose: under the strong working pressures, the strain strength of the hot metal drops and tends to expand and, accordingly, the plastic hose expands.

On the contrary, the hose according to this invention is mainly made of plastic, which, as everybody known, is less deformable than the rubber, while the mesh, for it is made of non-metal fabric, does not absorb heat and therefore withstands higher working temperatures without decreasing its mechanical characteristics.

Compared with the rubber hoses with fabric mesh embedded in the hose, the hose according to this invention turns out to be less deformable, just because the materials used are less deformable.

An additional important feature of the method according to this invention is represented by the fact that the plastic hose layers, the internal hose 2 and the external coating 5, are not simply glued, hot moulded or coextruded together, with the consequent alteration of the material properties as it happens in some cases, but they are cold assembled by simple interposition of one fabric layer embedded in an adhesive latex which does not prejudice the qualities of the plastic of the hose.

More particularly the method consists of the following phases:
- production of the hose by extrusion of plastic;
- pouring of potyethylene-based glue on the hose;
- braiding on the hose of yarns, in particular KURALON® (polyvinyl-alcohol fibre), followed by impregnation and spreading of the said glue on hose and fabric;
- lapping and calibration of the glue solution by means of passage through sizing die;
- drying in which pre-cross linking of the glue occurs;
- recoating of plastic, in particular polyester.

The advantages offered by a flexible plastic hose made according to the said method are remarkable, since it implies the use of simple and inexpensive processes, aiming at obtaining a higher level of flexibility and tightness and therefore offering the possibility of use of plastic hoses also where the known plastic hoses reinforced with metal braid, due to their poor deformability, create problems.

A skilled in the art may make changes and different versions which must be considered included within the competence of this invention.

## Claims

1. Multilayer plastic hose for hydraulic circuits **characterised by** the fact that at least one intermediate layer is composed of a braid (4) made of fabric, embedded in such an adhesive solution (3) as to guarantee a better strain resistance.

2. Multilayer plastic hose for hydraulic circuits according to the first claim **characterised by** the fact that the said braid (4) is made of polyvinyl-alcohol fibre (KURALON®).

3. Multilayer plastic hose for hydraulic circuits according to any of the previous claims **characterised by** the fact that the said adhesive solution (3) is a polyethylene-based solution.

4. Multilayer plastic hose for hydraulic circuits according to claim 1 or 2 **characterised by** the fact that the said adhesive solution (3) is a chlorosulphonated polyethylene-based solution.

5. Multilayer plastic hose for hydraulic circuits according to claim 1 or 2 **characterised by** the fact that the said adhesive solution (3) is a sulphonated polyethylene-based solution.

6. Method for producing a multilayer plastic hose for hydraulic circuits **characterised by** the fact to provide for the following phases:
- pouring on a plastic hose of an adhesive solution;
- braiding on the hose of yarns, followed by impregnation and spreading of the said adhesive solution on hose and fabric;
- lapping and calibration of the adhesive solution by means of passage through sizing die;
- drying in which pre-cross linking of the glue occurs;
- recoating with plastic, in particular polyester.

7. Method for producing a multilayer plastic hose for hydraulic circuits according to the claim 6 **characterised by** the fact that the said adhesive solution is a chlorosulphonated polyethylene-based solution.

8. Method for producing a multilayer plastic hose for hydraulic circuits according to the claim 6 **characterised by** the fact that the said adhesive solution is a sulphonated polyethylene-based solution.

9. Method for producing a multilayer plastic hose for hydraulic circuits according to the claim 6 **characterised by** the fact that the said yarn is made of polyvinyl-alcohol fibre (KURALON®).

10. Multilayer plastic hose for hydraulic circuits with interposition of mesh embedded into a diaphragm and respective production method as described and shown.
